# EUROPEAN PATENT SPECIFICATION

(11) **EP 2 700 467 B1**
(45) Date of publication and mention of the grant of the patent: **08.01.2020**
(21) Application number: 13180545.9
(22) Date of filing: 15.08.2013
(51) Int. Cl.: B23K 5/00, B23K 5/18, B23K 9/235, B23K 5/213, B23K 37/00

(54) **A pre-heating equipment**
Vorwärmausrüstung
Équipement de préchauffage

(30) Priority: 21.08.2012 GB 201214858
(43) Date of publication of application: 26.02.2014
(73) Proprietor: Thermit Welding (GB) Ltd, Rainham, Essex RM13 9YH (GB)
(72) Inventor: Johnson, Richard Storer, Rainham, Essex RM13 9YH (GB); Banton, Ian, Rainham, Essex RM13 9YH (GB)
(74) Representative: Swindell & Pearson Limited

(56) References cited:
- WO-A2-2009/067029
- US-A1- 2006 169 745
- US-A1- 2011 253 702

## Description

### Background to the Invention

The present invention relates to a pre-heating equipment.

In particular, the present invention relates to a pre-heating equipment forming part of a welding process.

Welding commonly involves the process of joining materials, in particular metals or thermoplastics, by causing a coalescence of the materials.

This is often done by melting a number of work pieces and adding a filler material to form a pool of molten material such that when cooled, it becomes a strong joint. In order to produce the weld, as well as heat, pressure may also be utilised. Many different energy sources for welding are utilised including a gas flame, an electric arc, a laser, an electron beam, friction and ultrasound.

When welding higher strength steels, it is common practice to incorporate a preheating process into the welding method in order to produce the best metallurgical properties in the welded joint.

Controlling this preheating process is fundamental to the final quality of the welded joint.

Alumino-thermit welding has been used extensively to weld railway rails on site and is a common known practice throughout the world. Commonly, alumino-thermit welding methods incorporate a pre-heating procedure whereby the materials to be combined to form the weld pool are pre-heated prior to being added to the materials where a joint is formed at. The pre-heating procedure is fundamental to the final quality of the welded joint and as such the parameters controlling the pre-heating process must be closely monitored, measured and controlled in order to produce a high quality final welded joint.

Alumino-thermit welding processes commonly use a fuel gas for pre-heating which is usually mixed with oxygen, although there are some which use a fuel gas/air mixture. The most common fuel gases are propane and acetylene.

There are a number of parameters which are required to be controlled, monitored and measured during operation of the pre-heating process which include the fuel gas type, the oxygen/air pressure or flow rate, the fuel gas pressure or flow rate, the temperature and the pre-heating time.

Known processes for controlling, monitoring and measuring the pre-heating process have relied on the training and skill of the welding operator, the condition of the pre-heating appliances and associated gas fittings, visual measurement using basic mechanical gauges by the operator and a manual stop watch.

Should the parameters of the pre-heating process not be adhered to then this can lead to substandard final weld joints and subsequently the requirement for timely and costly removal and replacement of them. Common pre-heating process faults which result in welds being of a sub-standard nature include;
- insufficient gas, faulty gas supply/regulator
- incorrect gas pressures
- inaccurate measuring devices
- insufficient gas flow
- incorrect pre-heating time
- incorrect heating temperature

Therefore, there is a need for a pre-heating equipment for a welding process that comprises an accurate monitoring and measuring device such that the operator can readily identify when a pre-heating system is faulty such that the fault can be repaired/addressed and therefore minimise the number of substandard final weld joints.

There is a further need for a pre-heating equipment for a welding process which enables the parameters of a pre-heating system to be controlled such that these parameters are maintained in order to minimise the risk of sub-standard welds.

US2006/169745 A1, forming the basis for the preamble of claim 1, discloses a multi-function digital pressure measuring device and welding torch having an outlet nozzle with first and second gas inlets with valves. The pressure measuring device having a body with a first gas chamber and a first inlet and a first outlet where the first inlet is connectable to a first gas supply line and the first outlet is connectable to the first gas inlet of the nozzle to permit gas to pass through. The body further having a second gas chamber with a second inlet and a second outlet where the second inlet is connectable to a second different gas supply line and the second outlet is connectable to the second gas inlet of the nozzle to permit gas to pass through. A display is provided attached to the body and a sensor for measuring pressure associated with the first and second gas chamber. A microprocessor is provided connected to the display and sensor, the microprocessor functioning to calculate elapsed time and pressure for display, thereby providing a welder with an accurate preheat indicator of the materials to be welded.

### Summary of the Disclosure

According to the present disclosure, there is provided a pre-heating equipment for a welding process as defined by claim 1.

Further possibilities are defined by the dependent claims.

The pre-heating equipment may comprise a gas mixing chamber connectable to the pre-heater head.

The pre-heater module may comprise the gas mixing chamber.

The control module may comprise an internal hardware for storing predetermined pressure ranges and/or time parameters and/or temperature ranges for the system to operate at.

The control module may comprise a transmitter for transmitting information related to predetermined pressure ranges and/or time parameters and/or temperature ranges for a particular pre-heat operation to the pre-heater module.

The pre-heater module may comprise a receiver for receiving the information from the control module.

The pre-heating equipment may form part of a pre-heating system when in use.

The temperature and/or pressure and/or operation time parameters of a pre-heating system may be defined by the predetermined information stored in the control module.

The control module may be set at a predetermined operation mode to predetermine the temperature range and/or pressure range and/or pre-heating operational time for a particular pre-heat operation of a pre-heating system.

The pre-heat operation may be activated upon transmittal of the predetermined information from the control module to the pre-heater module and the engagement of a start button by an operator.

The start button may be located on the pre-heater.

The pre-heater module may be configured to display pressure and/or temperature readings during the pre-heat operation.

The pressure and/or temperature readings of the pre-heater module during operation may be transmitted to the control module at regular intervals and may be at one second intervals.

The pre-heater module may comprise an audio and/or visual warning indicator to indicate to the operator if the temperature and/or pressure of the system during operation exceeds the predetermined operational parameters.

The measuring and monitoring module may comprise a countdown timer configured to count down a predetermined operational time for the pre-heat operation.

The countdown timer may be automatically activated upon engagement of the start button.

The pre-heater module may comprise an ignition switch.

The measuring and monitoring module may comprise at least two gas inlets for receiving two different gases from the pre-heating system.

The pre-heater module may comprise at least one outlet.

The pre-heating equipment may comprise at least one gas supply.

The gas inlet may comprise a connection means to the gas conduit.

The gas conduit may comprise a connection means to the gas supply.

The gas inlet may comprise a hose.

The hose may comprise rubber tubing.

Alternatively, the gas inlet may comprise a pipe arrangement.

The pipe arrangement may be comprised of metal.

The measuring and monitoring module may comprise a waterproof housing.

The measuring and monitoring module may be powered by a battery source.

The pre-heating equipment may be used in a closed pre-heating system.

At least one gas supply may supply a fuel gas or air and/or oxygen.

The equipment may comprise at least one flash back arrester connectable to the at least one gas supply.

The fuel gas may be propane.

The fuel gas may alternatively be acetylene.

There may be at least two conduits connectable to at least two gas inlets.

The control module may comprise a USB connection port.

The control module is in wireless connection with the pre-heater module.

The control module may comprise a GSM transmitter.

The control module may comprise a GPS location device

The control module may comprise magnetic key identification means for identification of an operator.

The control module may comprise a touch screen display.

The control module may comprise a bar code reader.

### Brief Description of the Drawings

Figure 1 illustrates schematically a pre-heating equipment according to known prior art.
Figure 2 illustrates diagrammatically a pre-heating equipment according to an embodiment of the present invention.
Figure 3 illustrates diagrammatically a birds-eye view of a section of a pre-heating system according to an embodiment of the present invention.
Figure 4 illustrates diagrammatically a pre-heating equipment and an enlarged view of a control module according to an embodiment of the present invention.
Figure 5 illustrates diagrammatically a pre-heating equipment with an enlarged view of a control module and a telecommunications/multimedia device according to an embodiment of the present invention.
Figure 6 illustrates diagrammatically a pre-heating equipment with an exploded view of a control module and a personal computer according to an embodiment of the present invention.

### Detailed Description of the Drawings

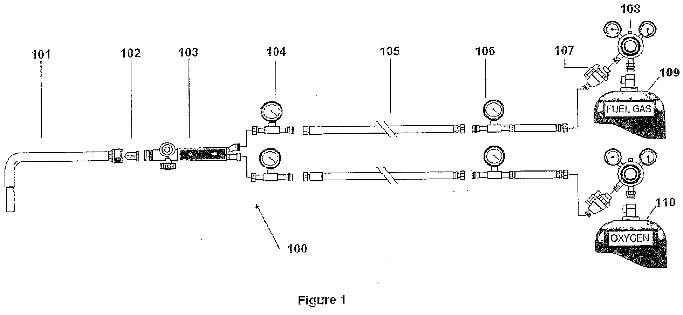

Embodiments of the invention will now be described herein with reference to the drawings by way of example only. In the following description (excluding reference to figure 1) numerous specific details are set forth in order to provide a thorough understanding. It will be apparent, however, to one skilled in the art, that the present invention may be practised without limitation to the specific details. In other circumstances, well known methods and structures have not been described in detail so as not to unnecessarily obscure the description.

Referring to Figure 1 herein, there is illustrated a pre-heating equipment 100 as known in the art. The known pre-heating system 100 comprises pre-heater head 101, injector 102, mixing chamber 103, pressure gauge at position A, 104, gas hose 105, pressure gauge at position B (optional), 106, flash back arrester 107, regulator 108, fuel gas supply 109 and oxygen/air supply 110.

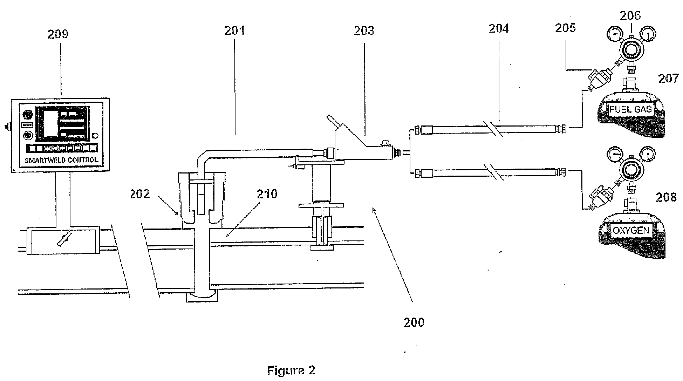

Figure 2 illustrates a pre-heating equipment 200 according to an embodiment of the present invention. Figure 2 provides a pre-heating system 200, pre-heater head 201, weld component chamber 202, pre-heater module 203, gas conduit 204, flash back arrester 205, regulator 206, fuel gas supply 207, oxygen/air supply 208, control module 209 and railway track 210.

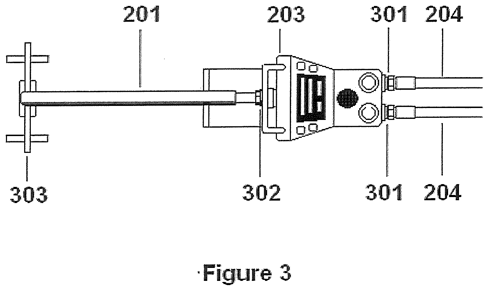

Figure 3 illustrates a section of the pre-heating equipment 200 showing the pre-heater module 203, a gas inlet 301, gas conduit 204, gas outlet 302, pre-heater head 201 and clamp means 303.

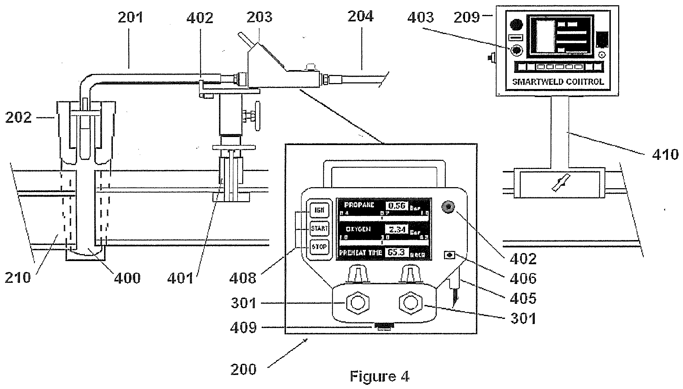

Figure 4 illustrates the pre-heater equipment 200 with an enlarged view of the pre-heater module 203. Figure 3 also shows the pre-heater 201, weld component chamber 202, pre-heater module 203, a pre-heater module panel 203a, gas conduit 204, control module 209, railway track 210, weld mould 400, rail clamp 401, pre-heater holder 402, wireless connection 403, wired connection point 405, wireless connection 406, charging socket 407, pre-heater module controls 408, I/R and temperature sensor connection point 409.

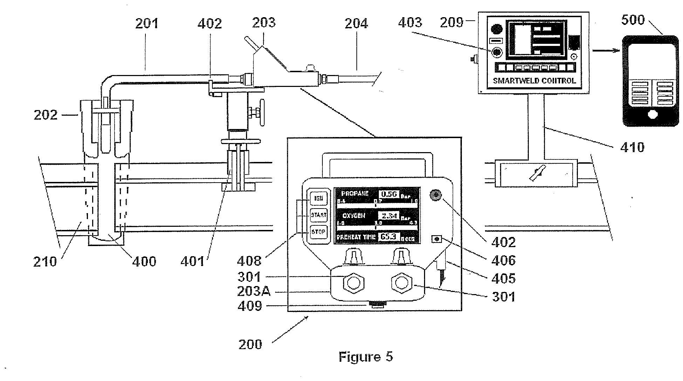

Figure 5 illustrates the pre-heater equipment 200 with an enlarged view of a pre-heater module 203. Figure 5 shows the pre-heater 201, weld component chamber 202, pre-heater module 203, pre-heater module panel 203a, gas conduit 204, control module 209, railway track 210, weld mould 400, rail clamp 401, pre-heater stand 402, wireless connection 403, wired connection point 405, wireless connection 406, charging socket 407, pre-heater module controls 408, temperature sensor connection point 409. Figure 5 also illustrates a telecommunications/multimedia device 500.

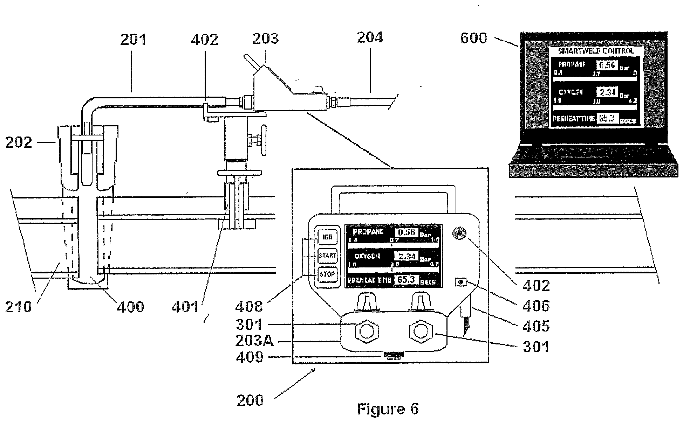

Figure 6 illustrates a pre-heating equipment 200 and shows the pre-heater head 201, weld component chamber 202, pre-heater module 203, pre-heater control panel 203a, gas conduit 204, pre-heater module panel 203a, railway track 210, weld mould 400, rail clamp 401, pre-heater stand 402, wired connection point 405, wireless connection 406, charging socket 407, temperature sensor-connection point 409, pre-heater module controls 408 and personal computer/remote sensor 600.

Figure 1 refers to a pre-heating equipment 100 which is known in the art. The pre-heating equipment 100 comprises a fuel gas supply such as propane and/or acetylene gases 109 and an air or oxygen supply 110. The gas supplies 109 and 110 are generally in the form of gas tanks or chambers. The gas chambers 109, 110 commonly each comprise a connection to a regulator 108 to regulate the amount and pressure of gas entering the system from the supplies 109, 110.

The regulator 108 has a regulator valve to control the gas flow a regulator gauge to monitor the gas flow from the gas supplies 109 and 110. The gas supplies 109, 110 are connected to separate gas conduits 105 usually in the form of a gas hose. A flash back arrester 107 is fitted in between the regulator 108 and gas hose 105. The flash back arrester 107 prevents flames from burning back up the system causing damage and/or explosions. The flash back arresters allow free-flow of gas through them having a temperature control valve which will cut off the gas flow when the unit reaches a set temperature, therefore avoiding heat/flames to enter back into the gas supplies 109, 110.

The gas conduit 105 transports gas from the gas supplies 109, 110 to a gas mixing chamber 103. In known pre-heating equipment 100, an analogue pressure gauge is usually fitted to the system at either position A, 104 or position B, 106. When the pressure gauge is in position A, the pressure gauge is fitted between the gas conduit 105 and mixing chamber 103 whereas when the pressure gauge is in position B, 106, it is positioned between the flash back arrester 107 and gas conduit 105. The pressure gauges 104 and 106 are analogue pressure gauges and are mechanical devices which rely on the movement of a tube under pressure to deflect a needle via a gear mechanism, the deflection of the needle being able to be read visually from a graduated dial. These devices are generally relatively fragile and will degrade with time due to wear in the moving parts. They can also be damaged permanently if too high a pressure is applied to the gauge.

The mixing chamber 103 generally comprises two gas inlet connection points which allow gas from the gas conduits 105 to mix. The gas conduits 105 are connected to the gas chambers 109, 110 and transport fuel gas and/or air/oxygen to the gas mixing chamber 103 such that the respective gases can mix. At an opposing end, an injector 102 is connected to the pre-mixing chamber 103 which is in turn connected to a pre-heater head 101. The pre-heater head 101 can then be directed towards a weld component chamber (not shown) to provide a gas supply and therefore suitable reaction conditions for the weld components in the chamber to undergo a combustion reaction.

When in use, the known pre-heating equipment 100 is in a closed system whereby fuel gas from fuel gas 109 and air/oxygen from air/oxygen supply 110 are transported via the gas conduit 105 to a gas mixing chamber 103. Once the fuel gas and air/oxygen supplies have been mixed in the gas mixing chamber 103, gas is injected via injector 102 through pre-heater head 101 and into the weld component chamber (not shown). Once gas is fed into the weld component chamber (not shown) from pre-heater 101, a flame is ignited and the weld component undergoes an exothermic combustion reaction to produce a molten mixture that can be used to weld railway track components.

The existing equipment is disadvantageous as it is difficult for the user to monitor and control operation of the equipment due to the limitation of the analogue pressure gauges 104 and 106. Furthermore, there is no control over the temperature of the system and also there is no method of monitoring the time of a specific pre-heating operation. Furthermore, the pre-heating equipment 100 does not provide for a method of implementing pre-set parameters for particular heating operations such that the pre-heating system can be controlled under optimum pressure, temperature and time conditions.

The existing equipment is further disadvantageous as the preheating is controlled using the pressure gauges 104 or 106 which measure the gas pressures before they are controlled by the valves on the mixing device 103. Therefore, such measurements will not represent the pressures of the two gases as they are mixed at the injector.

The general fittings at the connection points of various components of the pre-heating system of the present invention are well known in the art. These can include, but are not limited to, male and female screw thread fittings, nuts and bolts, snap fit joints and the like. It is also well known in the art that common sealing techniques may be used, for example, by use of rubber O-rings. Such components have not been described in detail herein so as not to unnecessarily obscure the invention.

Referring to Figures 2 - 6 herein, the pre-heating system 200 of the present invention comprises gas supply 207 and gas supply 208. Gas supply 207 supplies a fuel gas to the system, for example a fuel gas. Gas supply 208 supplies a gas to facilitate combustion, for example air or oxygen gas.

A regulator 206 is connected to either the gas supply 207 and/or gas supply 208 which will regulate the gas entering the system 200. Regulators 206 comprise a pressure gauge for visually monitoring the pressure of the gas being supplied to the system 200 by either the gas supply 207 or gas supply 208 and further comprise at least one valve to regulate the gas entering the system.

A flash back arrester is preferable to provide a conduit between the regulator 206 and gas conduit 204, such as to prevent an explosion through flames returning backwards of the system 200 towards either the gas supply 207 or gas supply 208. The gas conduit 204 is connected at a first end to the flash back arrester 205 and at a second end to a pre-heater module 203. Each gas supply 208, 207 is preferably connected to the pre-heater module 203 via a separate gas conduit 204. The gas conduit 204 is preferably in the form of a gas hose or pipe arrangement. The gas hose may be flexible tubing such as a rubber hose or a more rigid conduit such as metal piping.

Preferably the pre-heater module 203 will comprise a gas inlet connection point 301 for connecting to a gas conduit 204 from a fuel gas supply 207 and a separate gas inlet connection point 301 for a gas conduit 204 to receive air/oxygen gas from gas supply 208. The pre-heater module 203 further provides a gas outlet 302 for connection of the pre-heater module to a pre-heater head 201. The pre-heater head 201 may comprise an injector (not shown) and a mixing chamber (not shown). Alternatively, the injector and/or mixing chamber may be separate components to the pre-heater head 201.

In another arrangement a mixing chamber may not be present at all and mixing of the gas of the system 200 may occur within a chamber of the pre-heater module 203. The pre-heater head 201 of the pre-heating system directs mixed gas to a weld component chamber 202. Weld component chamber 202 will hold a predetermined mixture of weld components of which when subjected to fuel, gas and air/oxygen from the pre-heating system 200 and an ignition, the components in chamber 202 will combust and produce a molten weld suitable for welding railway track materials 210. The system 200 may alternatively not comprise a weld component chamber 202.

The pre-heater module 203 has a wireless connection to the control module 209, for example by wireless connection 406 to the wireless connection 403 of the control module 209. The control module 209 is located remotely from the pre-heater module 203 and can be clamped on a stand 410 such that the control module 209 is located away from the weld component chamber 202 and can be stably affixed to a surface.

The pre-heater module 203 comprises a panel 203a having control buttons 408 such as a start button, a stop button, and an ignition configured to ignite the components of the weld component chamber 202 to initiate a reaction. The pre-heater module 203 further comprises a display panel to display the change in gas pressure in the system 200 from the gas supply 207 and the gas pressure in the system 200 from the gas supply 208, as well as the temperature of the system and the pre-heating time. The pre-heater module 203 comprises a connection means 409 for connection of the pre-heater module 203 to a temperature sensor and an I/R sensor.

When in use, the regulator valve 206 on the gas supply 207 and gas supply 208 are switched open such as to allow gas from both the supply 207 and supply 208 to enter the respective gas conduits 204 that they are connected to. In one mode, the gas supply 207 comprises a gas tank containing a fuel gas such as propane and/or acetylene. The gas supply 208 comprises a gas tank containing air and/or oxygen. Alternatively a gas supply supplying a pre-mix gas of fuel gas/air or oxygen, may be utilised. A mains gas supply may also be utilised by the equipment.

The gas conduits 204 preferably comprise a gas hose for transporting the fuel gas and the oxygen/air to the pre-heater module 203. The pre-heater module 203 comprises separate gas inlets 301 for connection of individual gas hoses 204 into the pre-heater module 203 to allow partial or full mixing of the gases within the pre-heater module 203. A single gas outlet 302 then allows the mixed gases to enter the pre-heater head 201. The mixed gases in the pre-heater head 201 are then directed into the weld component chamber 202 in order to facilitate a combustion reaction in the chamber 202.

In order to start a particular pre-heat process, the user commences by opening the control valves at the gas inlets 301 on the pre-heater module 203. The mixed gas may then be ignited at the pre-heater head 201 either by conventional means or by use of the ignition button 408 on the pre-heater module 203. The user will then adjust the operating pressures using the control valves at the gas inlets 301 until the correct pressures are displayed on the module 203A. The user may then attach the pre-heater to its stand 402. The pre-heat timer is then started using button 408 on the module display 403A. When the pre-heat is complete the timer is stopped using the stop button 408, the pre-heater is removed from its stand 401 and the flame extinguished by closing the gas valves at the gas inlets 301.

When connected either by a wireless connection to the controlling module 209, the specific preheating parameters for a given welding operation may be selected from a set of pull down menus programmed into 209. The control module 209 may comprise a hard drive with a number of set predetermined pre-heat operational modes. A user will be able to access and operate the control module 209 via a number of identification means such as a bar code reader, a swipe card reader or a magnetic strip identification means. Once the user has been identified and accessed the control module 209 they will be able to select a particular pre-heat operational mode and send the operational mode parameters to the pre-heater module 203 by a wireless means.

Once the appropriate welding and pre-heating process has been selected, the user will transmit the pre-heating parameters, together with operating tolerances for gas pressure and temperature, and pre-heating time to the pre-heater module 203. The pre-heater display unit 203A will display these pre-selected parameters.

In operation the gas pressures and temperature are continuously monitored and if they should not comply with the selected values an audible alarm will sound and will provide an audible indication during operation.

The user commences the preheat timing by pressing the start button on the display module 203A which starts a countdown timer which will count down a predetermined time for a particular pre-heat operation. On completion of the countdown, an audible alarm will alert the user to stop the timer by pressing button 408, and remove the pre-heater from its stand 401.

The data from the pressure and temperature transducers, together with the pre-heating duration is continuously recorded in the pre-heater module 203 and on completion of the pre-heat this data is sent automatically by wireless to the control module 209.

The pre-heating equipment 200 may comprise pressure transducers and temperature sensors. The pressure transducers and/or temperature sensors may be located inside the pre-heater module 203 or outside of the pre-heater module 203.

The pre-heater module 203 preferably comprises a display screen unit for the user to visually monitor the pre-heater equipment 200 in use. Preferably, the display screen unit is battery powered and comprises a transflective display screen unit. The display screen unit of the pre-heater module 203 allows the user to monitor the performance of a weld by displaying measurements of gas pressures, temperatures and timings on the display screen unit. Signals for gas pressure and gas temperature are supplied to the unit from pressure transducers and thermocouples which can be built into the pre-heater head 201 or anywhere in equipment 200 exposed to the gas stream.

The pressure transducers are resistance strain gauge devices and preferably comprise a wheatstone bridge, bonded to a membrane in the transducer that provides a voltage output that is directly proportional to pressure in either bar or PSI following conditioning of the signal.

The temperature signals are provided by a thermocouple which is positioned directly in the gas stream anywhere in the equipment 200. A thermocouple probe provides a voltage output from the coupling of a chromel and alumel from which develops a milli-voltage output which is directly proportional to the temperature within a specified temperature range.

Preferably, a thermocouple and a pressure transducer will be located in the equipment 200 to monitor the gas from gas supply 207 and the gas from gas supply 208 individually. For example, one set of pressure transducers and thermocouples may be located in gas conduit 204 connected to gas supply 207 and one set of pressure transducers and thermocouples may be located within the gas conduit 204 connected to the gas supply 208. If the set gas pressures/temperatures of the pre-heating equipment 200 in use cannot be maintained, an audible alarm or visual alarm will sound or show up on the pre-heater module 203 display. In addition to the pressure transducers and thermocouples, the pre-heater system 200 also comprises of temperature measuring devices and a weld tapping sensor excluded from this invention which can send signals to the pre-heater module 203 via connection point 409.

The pre-heating module 203 is configured for wireless connection to the control module 209, the control module providing additional control and recording functions. The control module 209 can be pre-programmed with all operating parameters for the pre-heating equipment 200 in use and stored on a hard drive within the control module 209. The pre-programming operation of the control module 209 can be initiated via transferring information via a USB connection on the control module 209. The control module 209 may comprise a built in GPS and a GSM transmitter.

The operational buttons of the control module 209, for example the on/off buttons and the menu navigation buttons, may be illuminated for night use. In addition, the control module 209 and/or the pre-heater module 203 may be retained within a waterproof outer shell or cover. In a separate mode, either the pre-heater module 203 and/or the control module 209 may comprise a touch screen display. The pre-heater module 203 and control module 209 may be in two-way wireless connection via a wireless connection 406 on the pre-heater module 203 and a wireless connection 403 on the control module 209.

The pre-heating system control module 207 when switched on may automatically connect to the pre-heating module 203. When battery powered, the control module 209 battery life may be displayed on the display touch screen. In one mode, the control module 209 may comprise a magnetic key receptor through which, when the user connects the magnetic key to the receptor, the welder's identification and training records are inputted onto the control module's 209 hard drive. The user can then operate the control module 209 by navigating through the menu buttons and the touch screen menus and can select a welding process and type of rail to be welded. Consumable information could be inputted into the control module 209 via a bar code reader.

Once a predetermined particular pre-heat operation has been selected, the control module 209 assigns a unique ID number for the weld and associated data records. A summary of the particular predetermined weld operation will then be displayed on the display screen of the control module 209 for the user to check. The particular pre-heat operation information can then be sent to the pre-heater module 203. Once the pre-heater module 203 initiates the pre-heating equipment 200 to function via the ignition button 208, the pre-heat time is in a countdown format with an audible alarm on the pre-heater module 203 which can advise the welder as the countdown reaches 0. When the pre-heating timer is stopped, the pre-heat duration is transmitted to the hard drive of the control module 209. During a particular pre-heat operation, a pre-heater module transmits wireless information concerning the gas pressure and temperature to the control module 209 at regular intervals. Preferably this information is transmitted at one second intervals.

Referring to Figure 5, the control module 209 may be in communication with a telecommunications and/or multimedia device 500 such as a Smartphone, iPhone or Android Phone. Referring to Figure 6, in an alternative arrangement, the control module of the pre-heating equipment 200 may be in communication with a laptop, personal computer and/or tablet and/or any other remote secure server 600. The control module 209 may be in communication with a telecommunications/multimedia device 500 or personal computer/remote server 600 via a GSM connection. The telecommunications device/multimedia device 500 and/or the personal computer/remote server 600 may comprise a secure server to which the following information is transmitted by the control module 209:
- site location (GPS coordinates) as well as rail and work site information
- welding process and consumables used
- date and time corresponding to welder identification
- rail temperature, ambient temperature and gas temperature
- actual pre-heating operation time, operating pressures and tapping time

The pre-heater module 203 is advantageous as the specific operating tolerances can be measured and displayed by the pre-heater module 203 and is able to receive specific pre-heater operational parameters. This means that the welder or user no longer has to rely on paper records or memory to monitor, measure and record a pre-heating process. The pre-heater module 203 further comprises visual and audible alarms if the parameters vary from the operation tolerance, therefore providing the user with an early warning when operation has gone wrong. The pre-heater module 203 is able to automatically transmit pressure, gas temperature and pre-heating time information to the control module 209, and from the control module 209 to either a telecommunications device/multimedia device 500 or personal computer/remote server 600 to store and provide quality records for the pre-heating equipment 200.

The monitoring of both gas pressures and temperature information, coupled with the dimensions of the injector dimensions of the pre-heater head 201, can be used to calculate the effective mass flow of each gas, which in turn may be used to calculate gas consumption and thermal energy of the pre-heating system 200. This could then be calculated to determine a more accurate measure of the pre-heating process of the pre-heating system 200.

While conventional preheating devices using gases rely on control by visual reference to pressure gauges positioned at a distance from the burner which may not provide an accurate measure of the actual preheating conditions, this equipment measures and monitors the operating parameters of gas pressure, gas temperature, and preheating time as close to the point at which the two gases are mixed as is possible thus providing a more accurate and precise measurement than alternative preheating equipment.

The equipment incorporates an integral digital display of gas pressures and preheating time and has the capability to transmit such information during the preheating process by wire or wireless to controlling or recording equipment. When connected to such controlling equipment the operator receives a visual and audible alert should the measured information be outside preset tolerances.

## Claims

1. A pre-heating equipment for a welding process, said pre-heating equipment comprising:
a pre-heater head (201) configured to direct gases to the weld components to be reacted;
a pre-heater module (203), the module comprising a gas inlet (301) for receiving a pressurised gas, a gas outlet (302) for allowing the pressurised gas to flow from the module towards the pre-heater head; the pre-heater module also comprising a gas pressure measurement means (206) for measuring the gas pressure and a temperature measurement means for measuring temperature;
at least one gas conduit (204) configured to direct the pressurised gas from a pressurised gas supply (207, 208) to the pre-heater module;
the pre-heater module being further configured to convert data from the gas pressure measurement means and the temperature measurement means into digital information, the pre-heater module being configured to provide the converted digital information visually and/or audibly, the pre-heating equipment including a control module (209), **characterised in that** the control module and the pre-heater module are configured for wireless connection to each other.

2. A pre-heating equipment according to claim 1, in which the pre-heating equipment includes a gas mixing chamber (103) connectable to the pre-heater head.

3. A pre-heating equipment according to any of the preceding claims, in which the preheating equipment forms part of a pre-heating system (100) and the control module includes internal hardware for storing predetermined pressure ranges and/or time parameters and/or temperature ranges for the pre-heating system to operate at.

4. A pre-heating equipment according to claim 3, in which the temperature and/or pressure and/or operation time parameters of a pre-heating system are defined by the predetermined information stored in the control module.

5. A pre-heating equipment according to claim 4, in which the control module is set at a predetermined operation mode to predetermine the temperature range and/or pressure range and/or pre-heating operational time for a particular pre-heat operation of the pre-heating system.

6. A pre-heating equipment according to claim 5, including a measuring and monitoring module which includes a countdown timer configured to count down a predetermined operational time for the pre-heat operation.

7. A pre-heating equipment according to claim 6, in which the measuring and monitoring module includes at least two gas inlets for receiving two different gases from the pre-heating system.

8. A pre-heating equipment according to any of the preceding claims, in which the pre-heater module includes at least one outlet (302), and includes at least one gas supply (207, 208).

9. A pre-heating equipment according to any of the preceding claims, in which the gas inlet includes a connection means to the gas conduit.

10. A pre-heating equipment according to any of the preceding claims, in which the gas inlet includes a hose.

11. A pre-heating equipment according to any of claims 1 to 9, in which the gas inlet includes a pipe arrangement.

12. A pre-heating equipment according to claim 6, or any of claims 7 to 11 when dependent on claim 6, in which the measuring and monitoring module includes a waterproof housing.

13. A pre-heating equipment according to claim 8, or any of claims 9 to 12 when dependent on claim 7, in which the at least one gas supply supplies a fuel gas or air and/or oxygen.

14. A pre-heating equipment according to claim 7, or any of claims 8 to 13 when dependent on claim 7, in which there are at least two conduits connectable to at least two gas inlets.

15. A pre-heating equipment according to any of the preceding claims, in which the control module includes a USB connection port.

## Patentansprüche

1. Vorwärmausrüstung für einen Schweißprozess, wobei die Vorwärmausrüstung umfasst:
einen Vorwärmkopf (201), der konfiguriert ist, um zu reagierende Gase zu den Schweißkomponenten zu leiten;
ein Vorwärmmodul (203), wobei das Modul einen Gaseinlass (301) zum Aufnehmen eines Druckgases, einen Gasauslass (302), um das Druckgas vom Modul zum Vorwärmekopf strömen zu lassen; das Vorheizmodul ebenfalls umfassend Gasdruckmessmittel (206) zum Messen des Gasdrucks und Temperaturmessmittel zum Messen der Temperatur;
mindestens eine Gasleitung (204), die konfiguriert ist, um das Druckgas von einer Druckgaszufuhr (207, 208) zum Vorwärmmodul zu leiten;
wobei das Vorwärmmodul ferner konfiguriert ist, um Daten aus den Gasdruckmessmitteln und den Temperaturmessmitteln in digitale Informationen umzuwandeln, wobei das Vorwärmmodul konfiguriert ist, um die konvertierten digitalen Informationen visuell und/oder akustisch bereitzustellen , wobei die Vorwärmausrüstung ein Steuermodul (209) enthält, **dadurch gekennzeichnet, dass** das Steuermodul und das Vorwärmmodule für eine drahtlose Verbindung untereinander konfiguriert sind.

2. Vorwärmausrüstung nach Anspruch 1, bei der die Vorwärmausrüstung eine mit dem Vorwärmkopf verbindbare Gasmischkammer (103) enthält.

3. Vorwärmausrüstung nach einem der vorstehenden Ansprüche, in der die Vorwärmausrüstung Teil eines Vorwärmsystems (100) ist und das Steuermodul interne Hardware zum Speichern von vorgegebenen Druckbereichen und/oder Zeitparametern und/oder Temperaturbereichen für das Vorwärmsystem zum Betrieb enthält.

4. Vorwärmausrüstung nach Anspruch 3, bei der die Temperatur und/oder Druck- und/oder Betriebszeitparameter eines Vorheizsystems durch die im Steuermodul gespeicherten vorbestimmten Informationen definiert sind.

5. Vorwärmausrüstung nach Anspruch 4, bei der das Steuermodul auf eine vorgegebene Betriebsart eingestellt ist, um den Temperaturbereich und/oder Druckbereich und/oder Vorheizbetriebszeit für einen bestimmten Vorwärmbetrieb des Vorwärmsystems vorzugeben.

6. Vorwärmausrüstung nach Anspruch 5, umfassend ein Mess- und Überwachungsmodul, das einen Countdown-Timer enthält, der dazu konfiguriert ist, eine vorgegebene Betriebszeit für den Vorwärmbetrieb herunterzuzählen.

7. Vorwärmausrüstung nach Anspruch 6, bei der das Mess- und Überwachungsmodul mindestens zwei Gaseinlässe zum Aufnehmen von zwei verschiedenen Gasen aus dem Vorwärmsystem beinhaltet.

8. Vorwärmausrüstung nach einem der vorstehenden Ansprüche, wobei das Vorwärmmodul mindestens einen Auslass (302) und mindestens eine Gaszufuhr (207, 208) beinhaltet.

9. Vorwärmausrüstung nach einem der vorstehenden Ansprüche, wobei der Gaseinlass ein Verbindungsmittel zur Gasleitung beinhaltet.

10. Vorwärmausrüstung nach einem der vorstehenden Ansprüche, wobei der Gaseinlass einen Schlauch beinhaltet.

11. Vorwärmausrüstung nach einem der Ansprüche 1 bis 9, bei der der Gaseinlass eine Rohranordnung beinhaltet.

12. Vorwärmausrüstung nach Anspruch 6 oder einem der Ansprüche 7 bis 11, falls von Anspruch 6 abhängig, in dem das Mess- und Überwachungsmodul ein wasserdichtes Gehäuse beinhaltet.

13. Vorwärmausrüstung nach Anspruch 8 oder einem der Ansprüche 9 bis 12, falls von Anspruch 7 abhängig, bei dem die mindestens eine Gasversorgung ein Brenngas oder Luft und/oder Sauerstoff zuführt.

14. Vorwärmausrüstung nach Anspruch 7 oder einem der Ansprüche 8 bis 13, falls von Anspruch 7 abhängig, mit mindestens zwei Leitungen, die an mindestens zwei Gaseinlässe anschließbar sind.

15. Vorwärmausrüstung nach einem der vorstehenden Ansprüche, wobei das Steuermodul einen USB-Anschluss beinhaltet.

## Revendications

1. Equipement de préchauffage pour un procédé de soudage, ledit équipement de préchauffage comprenant :
une tête de préchauffage (201) configurée pour diriger les gaz vers les composants de soudure à faire réagir ;
un module de préchauffage (203), le module comprenant une admission de gaz (301) pour recevoir un gaz sous pression, une sortie de gaz (302) pour permettre au gaz sous pression de s'écouler depuis le module vers la tête de préchauffage ;
le module de préchauffage comprenant également des moyens de mesure de pression de gaz (206) pour mesurer la pression de gaz et des moyens de mesure de température pour mesurer la température ;
au moins un conduit de gaz (204) configuré pour diriger le gaz sous pression provenant d'une alimentation en gaz sous pression (207, 208) vers le module de préchauffage ;
le module de préchauffage étant en outre configuré pour convertir les données provenant des moyens de mesure de pression de gaz et des moyens de mesure de température en informations numériques, le module de préchauffage étant configuré pour fournir les informations numériques converties de manière visuelle et / ou audible, l'équipement de préchauffage comprenant un module de commande (209), **caractérisé en ce que** le module de commande et le module de préchauffage sont configurés pour une connexion sans fil.

2. Equipement de préchauffage selon la revendication 1, dans lequel l'équipement de préchauffage comprend une chambre de mélange de gaz (103) pouvant être connectée à la tête de préchauffage.

3. Equipement de préchauffage selon l'une quelconque des revendications précédentes, dans lequel l'équipement de préchauffage fait partie d'un système de préchauffage (100) et le module de commande comprend un matériel interne pour stocker des plages de pression et / ou des paramètres de temps et / ou des plages de température prédéterminés pour que le système de préchauffage fonctionne.

4. Dispositif de préchauffage selon la revendication 3, dans lequel les paramètres de température et / ou de pression et / ou de durée de fonctionnement d'un système de préchauffage sont définis par les informations prédéterminées stockées dans le module de contrôle.

5. Equipement de préchauffage selon la revendication 4, dans lequel le module de commande est réglé sur un mode de fonctionnement prédéterminé pour prédéterminer la plage de température et / ou la plage de pression et / ou le temps de fonctionnement de préchauffage pour un fonctionnement de préchauffage particulier du système de préchauffage.

6. Equipement de préchauffage selon la revendication 5, comprenant un module de mesure et de surveillance qui comprend un compte à rebours configuré pour décompter un temps de fonctionnement prédéterminé pour le fonctionnement de préchauffage.

7. Equipement de préchauffage selon la revendication 6, dans lequel le module de mesure et de surveillance comporte au moins deux admissions de gaz destinées à recevoir deux gaz différents provenant du système de préchauffage.

8. Dispositif de préchauffage selon l'une quelconque des revendications précédentes, dans lequel le module de préchauffage comprend au moins une sortie (302), et comprend au moins une alimentation en gaz (207, 208).

9. Dispositif de préchauffage selon l'une quelconque des revendications précédentes, dans lequel l'admission de gaz comprend des moyens de connexion au conduit de gaz.

10. Dispositif de préchauffage selon l'une quelconque des revendications précédentes, dans lequel l'admission de gaz comprend un tuyau.

11. Dispositif de préchauffage selon l'une quelconque des revendications 1 à 9, dans lequel l'admission de gaz comprend un agencement de conduit.

12. Dispositif de préchauffage selon la revendication 6, ou l'une quelconque des revendications 7 à 11 lorsqu'elle dépend de la revendication 6, dans lequel le module de mesure et de surveillance comprend un boîtier étanche à l'eau.

13. Dispositif de préchauffage selon la revendication 8, ou l'une quelconque des revendications 9 à 12 lorsqu'elle dépend de la revendication 7, dans lequel ledit au moins une source de gaz fournit un gaz combustible ou de l'air et / ou de l'oxygène.

14. Dispositif de préchauffage selon la revendication 7, ou l'une quelconque des revendications 8 à 13 lorsqu'elle dépend de la revendication 7, dans lequel il y a au moins deux conduits pouvant être connectés à au moins deux admissions de gaz.

15. Dispositif de préchauffage selon l'une quelconque des revendications précédentes, dans lequel le module de commande comprend un port de connexion USB.
